# EUROPEAN PATENT APPLICATION

(11) **EP 0 758 559 A1**
(43) Date of publication of application: **19.02.1997**
(21) Application number: 96202267.9
(22) Date of filing: 12.08.1996
(51) Int. Cl.: B01D 53/56

(54) **Method for reducing nitrogen oxides formed in a flue gas**

(30) Priority: 11.08.1995 SE 9502808
(71) Applicant: ARCHEMI AB, 253 60 Helsingborg (SE)
(72) Inventor: Henell, Lars, 256 67 Helsingborg (SE); Öhlund, Jan, 257 31 Rydebäck (SE)
(74) Representative: Petri, Stellan

(57) **Abstract**

The invention relates to a method for reducing nitrogen oxides (NO_{X}) by supplying a NO_{X} reducing agent together with an alkaline compound. The alkaline compound is supplied to the flue gas at a concentration of less than 5 ppm.

## Description

The invention relates to a method for reducing nitrogen oxides (NO_{X}) formed in a flue gas by supplying a NO_{X} reducing agent together with an alkaline compound to the flue gas.

Nitrogen oxide can be dissolved in water with the formation of nitric acid which has an acidifying and fertilizing effect on the environment. Nitrogen oxides also react with ozone and contributes in that connection to the reduction of the ozone concentration in the atmosphere.

Thus, there exist several environmental reasons for reducing the amount of nitrogen oxides in the atmosphere. Generally, a considerable contribution of nitrogen oxides is obtained in connection with different types of plants, partly ordinary combustion plants, partly process plants such as metallurgic and chemical process plants working at elevated temperatures.

The formation of nitrogen oxides in the different plants mainly takes place in three different ways. The nitrogen present in the fuel is oxidized in connection with the oxidation of other fuel components. Intermediate products in connection with the combustion can react with the nitrogen in the air of combustion which eventually forms a nitrogen oxide. Finally, a high temperature can result in an oxidation of the nitrogen in the air of combustion.

The reduction of nitrogen oxides can be controlled in several different ways. Primarily, a fuel with a low nitrogen content should be chosen so that the supply of nitrogen is minimized. By lowering the temperature in the combustion chamber the thermal formation of nitrogen oxides is reduced. The gaseous fuel results in the formation of nitrogen oxides. By controlling the flow and distribution of air in the furnace a more regular and lower temperature profile can be achieved, and so lower amounts of nitrogen oxides are formed. Further formation of nitrogen oxides can be reduced by recycling the flue gases to zones with a high oxygen content and an extensive combustion. Furthermore, the amount of nitrogen oxides can be reduced by supplying a pure fuel to the upper parts of the furnace.

In order to reduce the emission of nitrogen oxides (NO_{X}) in the combustion, a process known as thermal NO_{X} reduction is applied, ammonia or another nitrogen containing substance, or a nitrogen generating substance being supplied to the flue gas. The best reduction is achieved with a solid catalyst in combination with the addition of a chemical additive, a method which is called selective catalytic reduction (SCR). In this method of reducing NO_{X} in the flue gas by catalytic reduction ammonia or urea is supplied downstream of the furnace, and the mixture of the flue gas and ammonia is in contact with a catalyst. As the catalyst does not participate in the reaction between flue gas and the reducing agent but must, nevertheless, from time to time be replaced or exchanged, which adds to the operating costs of the plant.

A more inexpensive alternative is to use a method which is called selective non-catalytic reduction (SNCR) with or without the addition of a chemical additive. Primarily, ammonia or urea is used, but salts of these compounds as well as other amines can be used. In order to obtain a high NO_{X} reduction, ammonia is often supplied in a greater amount than that corresponding to the stoichiometric ratio, which may cause slip of unreacted ammonia with the flue gas. Under certain circumstances different additives are used in combination with the reducing agents in order to improve effect.

US 5,270,025 describes a method for controlling N₂O emissions as well as NO_{X} emissions by the addition of a NO_{X} reducing agent in the form of ammonia or urea and a N₂O control agent in the form of an alkaline compound of sodium or potassium among other elements. The concentration of urea is from about 2 % to about 30 % in a suitable solvent and the concentration of the alkaline compound, also dissolved in a solvent, is in the range of 0.25 % to about 7 %. Although these two solutions are not admixed before injection, the concentration of the alkaline compound corresponds to at least 7.5 % with respect to the amount of urea applied.

In order to obtain a reduction of NO_{X} in the flue gas, which is advantageous as to operating economy, to an acceptable value in a plant referred to above, the method according to the invention has obtained the characteristics specified in claim 1.

It has now surprisingly been shown that compared with the methods presently used a considerably smaller amount of additive in the form of an alkaline compound can be used together with a customary reducing agent for nitrogen oxides in NO_{X} reduction. According to the invention the alkaline compound is supplied to the flue gas at a very low concentration, i.e of less than 5 ppm.

The alkaline compound is preferably a potassium compound, more preferably a potassium compound in the form of potassium hydrogen carbonate and/or potassium hydroxide. The alkaline compound is supplied either as a solid or as a water solution in dependence on the type of combustion or process plant.

Preferably, ammonia or urea is used as NO_{X} reducing agent in order to obtain the low concentration of alkaline compound in the flue gas. It is according to the invention important that if urea is used as NO_{X} reducing agent in a liquid composition for introduction into a furnace via for example nozzles the urea content in the liquid composition should be at least about 30 weight%, preferably at least about 35 weight%, in dependence of the solubility of the other component(s) dissolved in the composition. Higher concentrations can be used but problems can arise due to crystal formation.

By using as high concentrations of the NO_{X} reducing agent in the form of urea as possible a rapid vaporization of the water present in the solution takes place. This in turn means a more rapid vaporization of the urea for radical formation, the radicals formed being responsible for the reduction of NO_{X}. Furthermore, a high urea concentration reduces the risk of ammonia formation, which ammonia can slip with the flue gas.

By dissolving the alkaline compound in the form of potassium hydrogen carbonate and/or potassium hydroxide in the urea solution and in an amount of about 2-7 %, preferably about 3-6 % with respect to the amount of urea or another reducing agent in the composition it is possible to achieve a low concentration of the alkaline compound in the flue gas while still achieving an improved reduction of the nitrogen oxide formed during combustion.

Preferably, the urea and the alkaline compound is added together to the flue gas, but they can also be added as two different compositions.

Furthermore, additional additives can be included which are evident from the examples below. The amount of solution supplied per unit of time depends of course on the size of the combustion or process plant but is also related to the nitrogen content in the air of combustion as well as other factors.

The additive in the concentrations according to the present invention can be used together with different production agents such as ammonia, urea, pulverized coal, carbon monoxide and other existing reducing agents and additives. It should be noted that carbon monoxide represents a reducing agent which can be formed in situ.

### Examples

The invention will be described below with reference to a number of experiments performed in a heating plant. The heating plant works with uniform load during long periods and exhibits very small fluctuations. The production is 10 MW. The furnace works at a temperature of 700-950 °C. As shown below, the supplied amount of urea solution with different additives was 25 kg/h corresponding to a molar ratio urea:NO_{X} of 1:1.

In order to have an initial value in connection with each run a reference sample was obtained on line in order to determine the nitrogen oxide and carbon monoxide contents during normal operation just before each run that run. These special values fluctuate somewhat during a 24 h period and it is thus important to have a blank value just before each run. Then a control of a commercial product was injected. Different compositions were then tested and between each composition blank values were registered. A test series was generally ended with a control and a blank.

### Example 1.

A comparison between different compositions according to the invention and (C1) were performed.

The compositions tested were:
C1 35 % urea solution with 3.5 % polyol and 3.5 % amino alcohol, both with respect to the urea content (control, a commercial product) ;
C2 35 % urea solution with 2 % potassium cerium acetate with respect to the urea content;
C3 35 % urea solution with 20 % ammonium nitrate with respect to the urea content;
C4 35 % urea solution with 5 % magnesium sulphate with respect to the urea content;
C5 35 % urea solution with 3.5 % polyol, 3.5 % amino alcohol and 2 % potassium cerium acetate with respect to the urea content;
C6 35 % urea solution with 7 % monoethanol amine with respect to the urea content;
C7 35 % urea solution with 5 % sodium hydrogen carbonate with respect to the urea content;
U1 35 % urea solution with 5 % potassium hydrogen carbonate with respect to the urea content;
U2 35 % urea solution with 5 % potassium hydroxide with respect to the urea content;
U3 35 % urea solution with 5 % potassium hydrogen carbonate with respect to the urea content and 5 % amino alcohol with respect to the urea content;
U4 50 % urea solution with 5 % potassium hydrogen carbonate with respect to the urea content;
U5 35 % urea solution with 3 % potassium hydrogen carbonate with respect to the urea content;
U6 35 % urea solution with 5 % potassium hydrogen carbonate with respect to the urea content and 5 % polyol with respect to the urea content; and
U7 35 % urea solution with 2.5 % potassium hydrogen carbonate with respect to the urea content and 2.5 % magnesium sulphate with respect to the urea content.

In table 1 below different runs each day are separated with a dashed line (-----). The table shows the carbon monoxide content, the NO_{X} content and the reduction of the NO_{X} content in relation to the reference sample taken immediately before the test run.

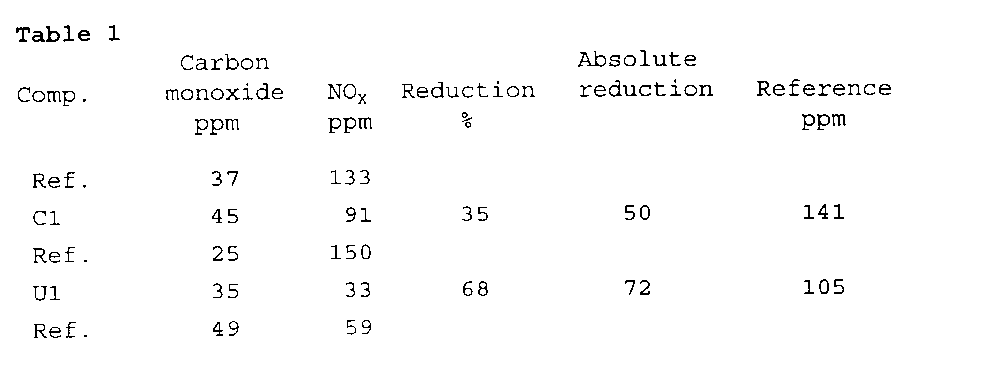

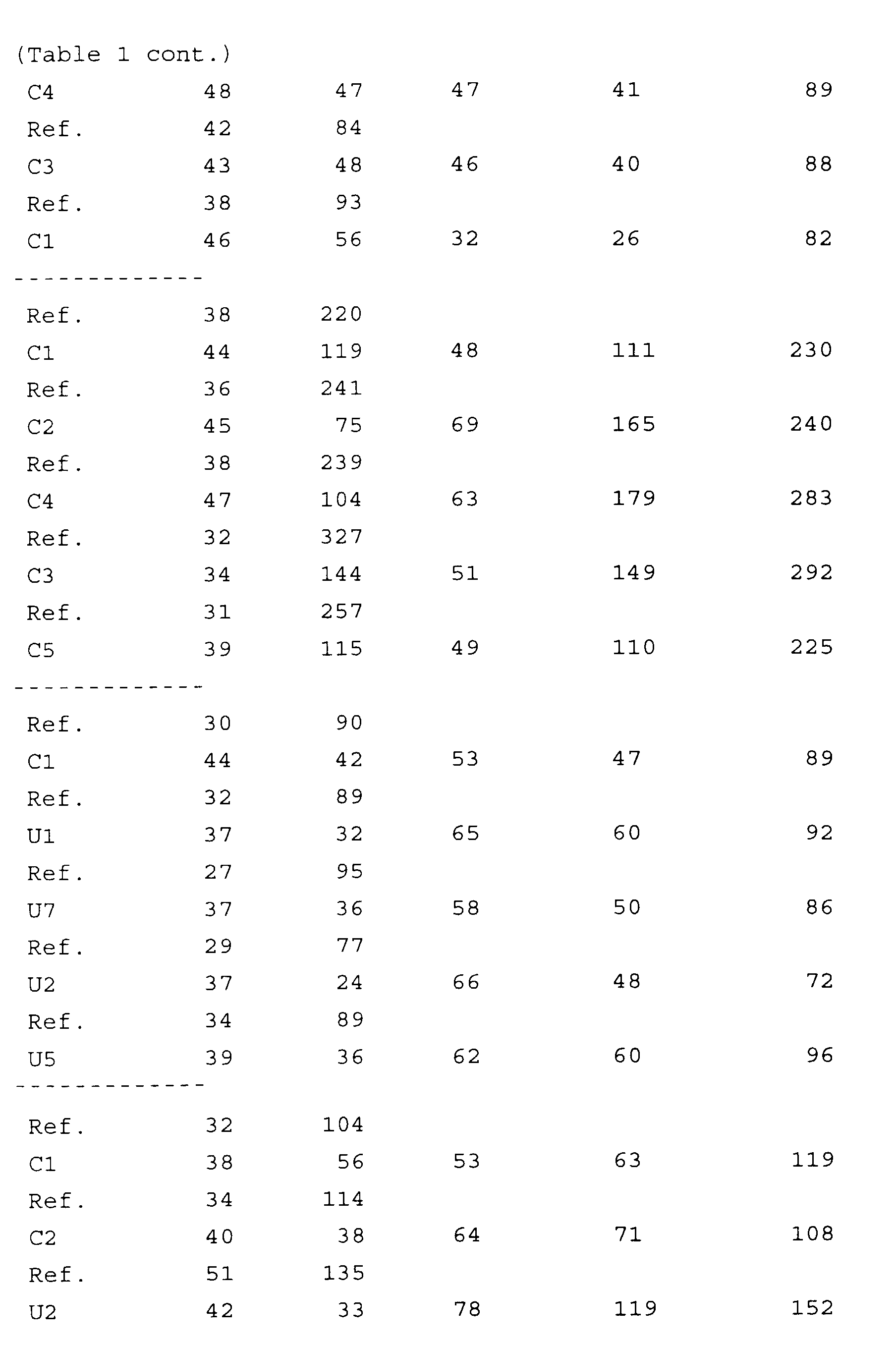

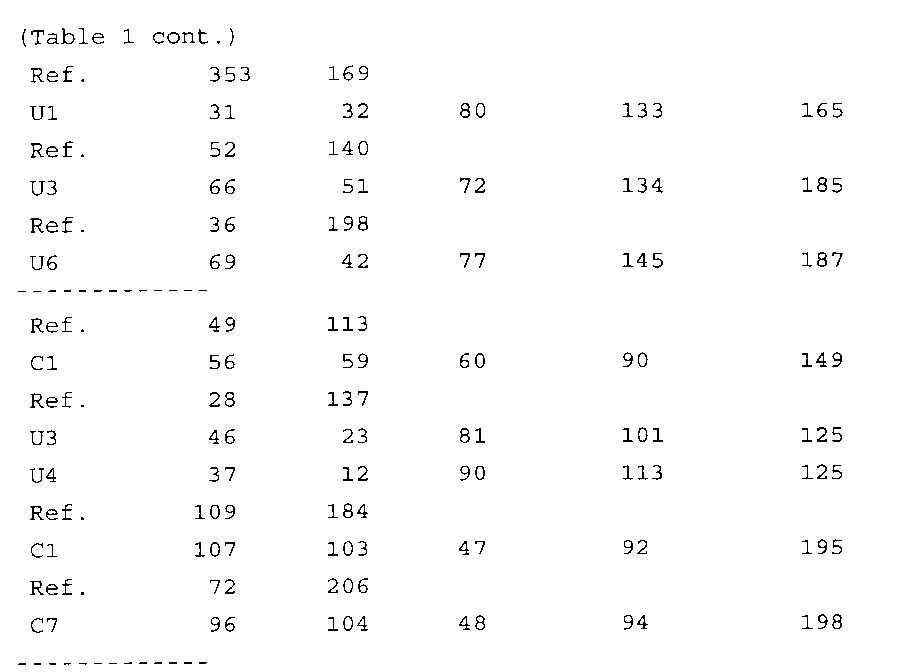

As is evident from table 1 the commercial product C1 exhibits a certain reduction of nitrogen oxides in the magnitude of about 50 %. However, the compositions U1, U3, U4, U5, U6, and U7 for the method according to the invention exhibit in most cases a considerably improved result.

### Example 2.

Further comparative experiments were performed in the heating plant mentioned above in order to verify the results obtained while measuring the concentrations of the different components in the flue gas. Thus, in the tables below values within parenthesis show the concentrations obtained of the components from the liquid compositions added, and in the tables themselves the results obtained with nitrogen containing substances in the flue gas are given. The results were calculated with respect to a reference having no NO_{X} reduction (blank). The experiments were performed with stoichiometric ratios urea:NO_{X} of 1:1. All concentrations given refer to gas stream concentrations.

The compositions tested (Table 2) were:
a 35 % urea solution;
a 35 % urea solution with 5 % potassium hydrogen carbonate with respect to the urea content;
a 35 % urea solution with 5 % sodium hydrogen carbonate with respect to the urea content; and
a 35 % urea solution with 3 % polyol and 4 % amino alcohol.

**Table 2**

| | NO_{X} reduction | | NH₃ | N₂O |
|---|---|---|---|---|
| | % | ppm | ppm | ppm |
| Urea (115 ppm) | 38 | 44 | 4 | 3 |
| Urea (115 ppm) + K (3.45 ppm) | 48 | 57 | 9 | 2 |
| Urea (115 ppm) + Na(4.11 ppm) | 41 | 45 | 14 | 1 |
| Urea (115 ppm) + amino alcohol (2.47 ppm) + polyol (1.97 ppm) | 20 | 21 | 3 | 1 |
| Blank | 0 | 0 | 4 | 0 |

Table 2 shows that urea with a small amount of potassium salt gives a better NO_{X} reduction compared with sodium, urea alone and urea with amino alcohol and polyol.

### Example 3.

In this experiment a confirmatory NO_{X} reduction was obtained with a very low potassium concentration in the flue gas in the magnitude of about 3 ppm. The experiment was performed with a stoichiometric ratio urea:NO_{X} of 1:1. The compositions tested (Table 3) were:
a 35 % urea solution with 3 % polyol and 4 % amino alcohol; and
a 35 % urea solution with 5 % potassium hydrogen carbonate with respect to the urea content.

**Table 3**

| | NO_{X} reduction | | NH₃ | N₂O |
|---|---|---|---|---|
| | % | ppm | ppm | ppm |
| Urea (115 ppm) + amino alcohol (2.47 ppm) + polyol (1.97 ppm) | 53 | 47 | 4 | 1 |
| Urea (115 ppm) + K (3.45 ppm) | 65 | 60 | 8 | 1 |
| Blank | 0 | 0 | 2 | 0 |

Table 3 shows that the effective potassium concentration in the flue gas is very low, i.e. well below 5 ppm.

### Example 4.

A comparison of the effect of different salts of potassium on the NO_{X} reduction was performed by using
a 35 % urea solution with 3 % polyol and 4 % amino alcohol;
a 35 % urea solution with 5 % potassium hydrogen carbonate with respect to the urea content; and
a 35 % urea solution with 5 % potassium hydroxide with respect to the urea content.

**Table 4**

| | NO_{X} reduction | | NH₃ | N₂O |
|---|---|---|---|---|
| | % | ppm | ppm | ppm |
| Urea (115 ppm) + amino alcohol (2.47 ppm) + polyol (1.97 ppm) | 53 | 64 | 0 | 2 |
| Urea (115 ppm) + K (3.45 ppm) as bicarbonate | 81 | 133 | 8 | 2 |
| Urea (115 ppm) + K(3.45 ppm) as hydroxide | 79 | 119 | 5 | 2 |
| Blank | 0 | 0 | 2 | 1 |

The results show that a slightly better reduction is obtained in the flue gas when potassium is added to the urea solution as a bicarbonate.

### Example 5.

Other relevant alkaline compounds earlier suggested (US 5,270,025) were also tested. A comparison was performed with a commercial product and a potassium salt according to the present invention. The compositions tested (Table 5) were
a 35 % urea solution with 3 % polyol and 4 % amino alcohol;
a 35 % urea solution with 5 % potassium hydrogen carbonate with respect to the urea content; and
a 35 % urea solution with 5 % magnesium sulphate with respect to the urea content.

**Table 5**

| | NO_{X} reduction | | NH₃ | N₂O |
|---|---|---|---|---|
| | % | ppm | ppm | ppm |
| Urea (115 ppm) + amino alcohol (2.47 ppm) + polyol (1.97 ppm) | 34 | 38 | 1 | 3 |
| Urea (115 ppm) + K (3.45 ppm) | 68 | 72 | 1 | 3 |
| Urea (115 ppm) + Mg (2.18 ppm) | 47 | 41 | 2 | 4 |
| Blank | 0 | 0 | 1 | 1 |

The results show that urea with potassium exhibit a much more effective NO_{X} reduction than urea with amino alcohol and polyol as well as urea with added magnesium salt.

### Example 6.

A relevant alkaline compound, calcium, was tested as in Example 5 but with a different approach in order to test its effect. The compositions tested (Table 6) were
a 35 % urea solution with 5 % potassium hydrogen carbonate with respect to the urea content; and
a 35 % urea solution with 5 % potassium hydrogen carbonate with respect to the urea content as well as a 35 % urea solution with 5 % calcium chloride with respect to the urea content.

**Table 6**

| | NO_{X} reduction | | NH₃ | N₂O |
|---|---|---|---|---|
| | % | ppm | ppm | ppm |
| Urea (115 ppm) + K (3.45 ppm) | 44 | 71 | 0 | 10 |
| Urea (115 ppm) + K (3.45 ppm) + Ca (4.07 ppm) | 41 | 62 | 0 | 11 |
| Blank | 0 | 0 | 0 | 3 |

Table 6 shows that in comparison with urea and potassium alone the addition of calcium to such a composition decreases the NO_{X} reduction.

## Claims

1. Method for reducing nitrogen oxides (NO_{X}) formed in a flue gas by supplying a NO_{X} reducing agent together with an alkaline compound, **characterized** in that the alkaline compound is supplied to the flue gas at a concentration of less than 5 ppm.

2. Method as claimed in claim 1, **characterized** in that the alkaline compound is a potassium compound.

3. Method as claimed in claim 2, **characterized** in that the alkaline compound is selected from potassium hydroxide and potassium hydrogen carbonate.

4. Method as claimed in claim 1, **characterized** in that the NO_{X} reducing agent is selected from ammonia and urea.

5. Method as claimed in claim 2, 3 and 4, **characterized** in that the urea is added as a water solution of more than about 30 weight% and that the alkaline compound is added as a solution in amount of about 2-7 % with respect to the amount of urea.

6. Method as claimed in claim 5, **characterized** in that the urea and the alkaline compound are added as a combined solution.
